# EUROPÄISCHE PATENTSCHRIFT

(11) **EP 3 046 711 B1**
(45) Veröffentlichungstag und Bekanntmachung des Hinweises auf die Patenterteilung: **19.09.2018**
(21) Anmeldenummer: 14741589.7
(22) Anmeldetag: 17.07.2014
(51) Int. Cl.: B23K 3/06

(54) **ANORDNUNG UND VERFAHREN ZUM REPRODUZIERBAREN AUFBRINGEN KLEINER FLÜSSIGKEITSMENGEN**
ARRANGEMENT AND METHOD FOR THE REPRODUCIBLE APPLICATION OF SMALL AMOUNTS OF LIQUID
SYSTÈME ET PROCÉDÉ PERMETTANT L'APPLICATION REPRODUCTIBLE DE FAIBLES QUANTITÉS DE LIQUIDE

(30) Priorität: 20.09.2013 DE 102013110402
(43) Veröffentlichungstag der Anmeldung: 27.07.2016
(73) Patentinhaber: Pac Tech - Packaging Technologies GmbH, 14641 Nauen (DE)
(72) Erfinder: AZHDAST, Mohammad Hossein, 13585 Berlin (DE); TABRIZI, Siavash Hosseinpour, 10627 Berlin (DE)
(74) Vertreter: Weisse, Renate
(86) Internationale Anmeldenummer: PCT/EP2014/065396
(87) Internationale Veröffentlichungsnummer: WO 2015/039783

(56) Entgegenhaltungen:
- EP-A2- 0 752 294
- WO-A1-03/006197
- WO-A1-03/024653
- WO-A1-2008/108097
- WO-A2-2005/100232
- DE-A1-102011 108 799
- DE-T2- 69 514 174
- FR-A5- 2 040 681
- JP-A- 2002 057 450
- US-A- 2 913 187
- US-A- 3 291 396
- US-A1- 2006 219 760
- US-A1- 2009 095 825
- US-A1- 2011 315 747
- US-B1- 6 336 581

## Beschreibung

### Technisches Gebiet

Die Erfindung betrifft eine Anordnung zum reproduzierbaren Aufbringen kleiner Flüssigkeitsmengen auf eine Zielfläche enthaltend
(a) ein Flüssigkeitsreservoir mit einer oberhalb der Zielfläche positionierbaren Öffnung,
(b) einen in Öffnungsrichtung beweglich angeordneten Stößel, und
(c) einen Antrieb zur Bewegung des Stößels, wobei
(d) die Öffnung in einer vorspringenden, sich verjüngenden Spitze oder Düse gebildet ist, und
(e) der Stößel sich durch die gesamte in dem Flüssigkeitsreservoir befindliche Flüssigkeit hindurch bis in die Spitze oder Düse erstreckt, so dass bei einer Stößelbewegung in Öffnungsrichtung Teile der Flüssigkeit im Öffnungsbereich vom Stößel durch die Öffnung nach außen bewegt werden.

Mit einer solchen Anordnung kann die Flüssigkeit durch Bewegung des Stößels auf einer ausgewählten Zielfläche aufgebracht werden.

### Stand der Technik

Es sind Dosiervorrichtungen, z.B. Spritzen bekannt, bei denen die Flüssigkeit wie bei einer Spritze mit einem Kolben oder Stempel aus einer Öffnung herausgedrückt wird. Der Kolben oder Stempel sitzt auf der einen Seite des Flüssigkeitsreservoirs und die Öffnung ist typischerweise auf der gegenüberliegenden Seite. Wenn der Kolben oder Stempel bewegt wird, wird die gesamte Flüssigkeit bewegt. Dadurch ist die Reproduzierbarkeit begrenzt. Der Kolben oder Stempel ist abdichtend in dem Flüssigkeitsreservoir geführt. Wenn die Flüssigkeit aufgebraucht wird, wird das Flüssigkeitsreservoir wieder aufgefüllt, in dem diese durch die Austrittsöffnung aufgefüllt wird, oder der Kolben oder Stempel wird zum Auffüllen entfernt.

Es sind weiterhin Dosiervorrichtungen bekannt, bei denen die Öffnung beispielsweise mit einem Shutter verschlossen wird. Dabei besteht die Gefahr, dass Flüssigkeitsreste im Bereich des Shutters oder der Öffnung bleiben und die Reproduzierbarkeit der Dosierung verschlechtern.

Es sind ferner Anordnungen bekannt, bei der einzelne Lötmasse-Kügelchen an einer Spitze aufgenommen werden. Die Kügelchen werden abgelegt und ein Laserstrahl wird durch eine Öffnung auf die Lötmasse gelenkt, so dass diese schmilzt und die Lötstelle bildet. Bei solchen Anordnungen ist kein Flüssigkeitsreservoir vorhanden.

US 2009/095825 A1 offenbart eine Dosiervorrichtung für Flüssigkeiten mit einem Flüssigkeitsreservoir und einer Düsenanordnung. Die Düsenanordnung ist lösbar mit dem Flüssigkeitsbehälter verbunden.

WO 2008/108097 A1 offenbart eine Ausstoßvorrichtung für Füllstoff, wie beispielsweise Lötpaste. Bei der Vorrichtung wird mittels Positionsbestimmung geregelt, dass der vordere Endabschnitt eines Stempels in der Nähe der Innenwand der Flüssigkeitskammer gestoppt wird, wenn sich der Stempel in Richtung Flüssigkeitsauslass bewegt.

DE 10 2011 108799 A1 offenbart ein Dosiersystem für einen flüssigen bis zähflüssigen Dosierstoff mit einem Aktorsystem, das mindestens ein Betätigungselement umfasst, und eine Düse mit einer Austrittsöffnung.

US 2011/315747 A1 offenbart einen Bestückkopf für Lötkugeln mit einem Trichter, einem Montagekopf und einen in Trichter und Montagekopf einführbaren Druckstift. Der Bestückkopf verfügt über einen Innendurchmesser, der die Bewegung der Lotkugeln beschränkt. Zum Zuführen einer Lötkugel drückt der Druckstift auf eine der Lötkugeln. Dadurch werden auf dem Zielsubstrat die Lötkugeln nacheinander aufgebracht.

US 2006/021976 A1 offenbart ein Verfahren und eine Vorrichtung zum Löten, ein Verbindungsverfahren, eine Verbindungsvorrichtung und eine Düseneinheit. US 6336581 B1 offenbart eine Vorrichtung für das Verbinden von Lötkugeln und eine kapillare Röhre dafür. WO 03006197 offenbart eine Vorrichtung zum Aufbringen eines Lötmittels durch Positionieren in festem Aggregatzustand, anschließendem Aufschmelzen und schließlich Schleudern gegen ein Substrat durch Druckgas. WO 03/024653 A1 offenbart ein Verfahren zur Herstellung einer Lotverbindung. JP 2002057450 offenbart eine Lötvorrichtung. EP 0752294 A2 offenbart eine Einrichtung zum Austragen von flüssigem Lot. FR 2040681 A5 offenbart eine Vorrichtung zum Greifen, Transportieren und Schweißen von kleinen Gegenständen.

### Offenbarung der Erfindung

Es ist Aufgabe der Erfindung, eine Vorrichtung der eingangs genannten Art mit besonders hoher Reproduzierbarkeit zu schaffen. Erfindungsgemäß wird die Aufgabe dadurch gelöst, dass ein Laser vorgesehen ist, dessen Strahlung auf den Öffnungsbereich gerichtet ist, und der Stößel hohl ist und die Laserstrahlung durch den Stößel in den Öffnungsbereich geleitet wird.

Dabei muss der Stößel die Öffnung nicht unbedingt verschließen. Die Flüssigkeit wird auf diese Weise ohne Shutter und ohne die Öffnung vollständig zwingend zu verschließen dosiert. Mit dem Stößel werden Teile der Flüssigkeit bewegt, die sich im Bereich vor der Öffnung befindet. Es hat sich gezeigt, dass dadurch eine höhere Reproduzierbarkeit erreicht werden kann, als bei Bewegung eines Kolbens, der von oben auf die Flüssigkeit drückt. Die Bewegung der Flüssigkeit wird insbesondere nicht nur von der Stirnfläche des Stößels bewirkt, sondern im Wesentlichen von der Mantelfläche. Im Bereich der Spitze oder Düse ist zwischen der Innenseite der Spitze oder Düse und der Mantelfläche des Stößels ein Ringkanal gebildet. Die Flüssigkeit gelangt durch den Ringkanal zur Öffnung und nach außen. Entsprechend dem so verringerten Strömungsquerschnitt wird die Flüssigkeit von der Mantelfläche mitgerissen und durch die Öffnung nach außen abgegeben.

Die Dosierung kann durch Beeinflussung der Viskosität, der Eindringtiefe des Stößels in die Spitze oder Düse, der Frequenz einer Auf- und Abbewegung des Stößels und durch die Geometrie und den Öffnungsquerschnitt der Spitze oder Düse eingestellt und an die Anwendung angepasst werden.

Es ist ein besonderer Vorteil der Erfindung, dass nicht nur eine hohe Reproduzierbarkeit erreicht wird, sondern auch, dass das Flüssigkeitsreservoir im oberen Bereich einen freien Querschnitt hat. Die Flüssigkeit kann auf diese Weise kontinuierlich auf- und nachgefüllt werden, ohne dass der Dosierprozess unterbrochen werden muss.

Bei einer Ausgestaltung der Erfindung ist vorgesehen, dass
(a) die Flüssigkeit von Lötmasse oder einer anderen Masse gebildet ist, die bei Raumtemperatur fest ist, und
(b) das Flüssigkeitsreservoir auf eine Temperatur oberhalb des Schmelzpunktes der Masse beheizbar ist.

Bei einer solchen Anordnung kann festes Material, etwa Lötmaterial, von oben nachgefüllt werden. Die Masse schmilzt in dem beheizten Reservoir. Am unteren Ende ist die Masse flüssig und kann auf die oben beschriebene Weise dosiert werden.

Ein Laser ist vorgesehen, dessen Strahlung auf den Öffnungsbereich gerichtet ist. Die Düse oder Spitze kann bei der Anordnung frei nach außen vorspringen. Dann besteht die Gefahr, dass dieser Bereich zu kalt ist und feste Lötmasse vor dem eigentlichen Dosieren abkühlt. Dies ist unerwünscht. Es können sich kalte Lötstellen bilden und die Lötmasse kann oxidieren. Die Strahlung des Lasers ist daher in den Öffnungsbereich gerichtet und heizt diesen zusätzlich.

Der Stößel ist hohl und die Laserstrahlung wird durch den Stößel in den Öffnungsbereich geleitet. Auf diese Weise wird nicht nur eine kompakte Anordnung erreicht, bei der die Laserstrahlung genau in den Öffnungsbereich gelangt. Der Laser stört auch nicht bei der Positionierung über beispielsweise einem Wafer.

In einer weiteren Ausgestaltung der Erfindung ist eine Gasquelle vorgesehen, deren Gas in den Öffnungsbereich leitbar ist. Das Gas kann Stickstoff oder ein anderes inertes Gas oder Gasgemisch sein. Mit einem inerten Gas wird vermieden, dass die Flüssigkeit frühzeitig oxidiert und sich dadurch unerwünschte Effekte einstellen. Das Gas kann aber auch alternativ oder zusätzlich beheizt sein. Dadurch wird eine zusätzliche Heizung der außen frei vorspringenden Düse oder Spitze erreicht.

Bei einer bevorzugten Ausgestaltung der Erfindung wird das Gas durch einen außen liegenden Kanal von der Gasquelle zum Öffnungsbereich geleitet, so dass Wärme aus dem Flüssigkeitsreservoir aufnehmbar ist. Beispielsweise kann das Flüssigkeitsreservoir von einer Bohrung in einem beheizten Metallzylinder gebildet sein. In diesem kann außen eine spiralförmige Nut vorgesehen sein, die mit einem rohrförmigen Mantel, der auf den Metallzylinder aufgeschoben und abgedichtet wird, zu einem Kanal verschlossen wird. Das Gas kann von oben in den Kanal eingeführt werden und am unteren Ende derart austreten, dass es in Richtung auf die Düse oder Spitze strömt. Dadurch wird erreicht, dass die Wärme abgeführt und der äußere Bereich gekühlt wird, so dass die Handhabung vereinfacht wird. Es wird zusätzlich erreicht, dass die vom Gas aufgenommene Wärme für die Heizung der Spitze oder Düse verwendet werden kann.

Das Gas kann ferner in den Bereich oberhalb der Flüssigkeit in dem Flüssigkeitsreservoir geleitet werden. Es kann einen erhöhten Druck aufweisen, so dass sichergestellt ist, dass die Flüssigkeit immer nach unten abfließt. Es kann ferner als Inertgas eine Oxidierung der Flüssigkeit verhindern.

Vorzugsweise wird das Flüssigkeitsreservoir aus einem weiteren Reservoir aufgefüllt, das über einen schrägen Kanal mit dem Flüssigkeitsreservoir verbunden ist. Zur Erreichung einer hohen Reproduzierbarkeit und Dosiergenauigkeit ist es sinnvoll, wenn das Flüssigkeitsreservoir nicht zu groß gewählt wird. Auch ist dann eine gleichmäßige Heizung einfacher zu verwirklichen als bei einem großen Flüssigkeitsreservoir. Insbesondere, wenn die Flüssigkeit einen Schmelzpunkt oberhalb der Raumtemperatur hat, wie dies bei Lötmasse der Fall ist, ist es wünschenswert, ein weiteres Reservoir vorzusehen, in dem die Masse in fester Form vorliegt. Die Masse kann in Form von Kügelchen oder anderem Schüttgut vorliegen und ein Rüttler kann vorgesehen sein, bei dessen Aktivierung die Kügelchen oder das Schüttgut durch den Kanal in das Flüssigkeitsreservoir geleitet werden. Hierbei ist keine sehr große Genauigkeit erforderlich, da lediglich das Flüssigkeitsreservoir auf- oder nachgefüllt wird. Vorteilhafterweise ist dabei ein Füllstandssensor im oberen Bereich des Flüssigkeitsreservoirs vorgesehen, dessen Signal zur Steuerung des Rüttlers verwendet werden kann. Wenn das Niveau des Sensors erreicht wird, wird der Rüttler abgeschaltet. Sinkt das Niveau unter einen unteren Schwellwert oder nach einer ausgewählten Zeit wird der Rüttler wieder aktiviert.

Ausgestaltungen der Erfindung sind Gegenstand der Unteransprüche. Ein Ausführungsbeispiel ist nachstehend unter Bezugnahme auf die beigefügten Zeichnungen näher erläutert.

### Kurze Beschreibung der Zeichnungen

- Fig.1: ist eine perspektivische Ansicht einer Anordnung zum Aufbringen von Lotmasse auf eine Zielfläche.

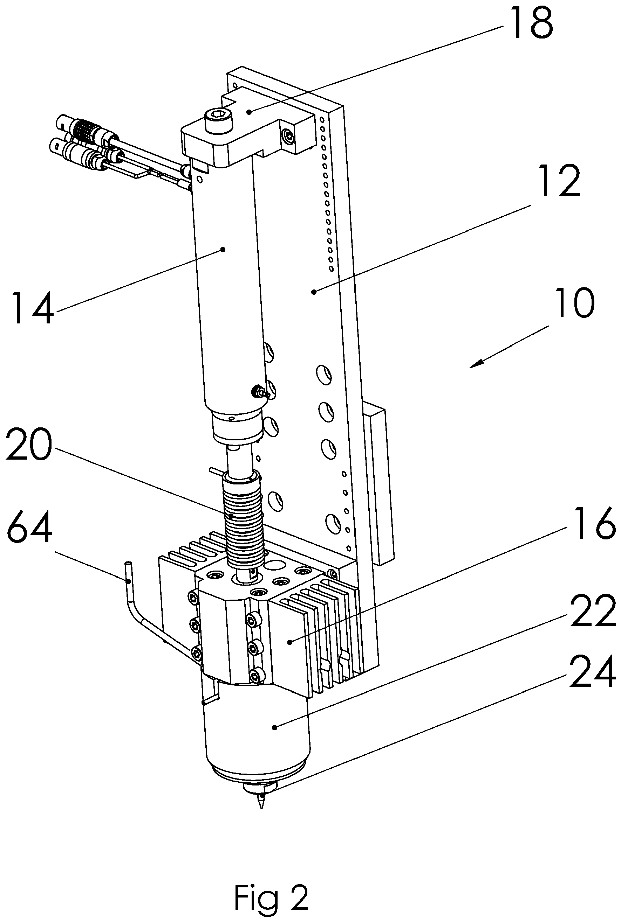

- Fig.2: zeigt die Anordnung aus Figur 1 aus einer anderen Perspektive.

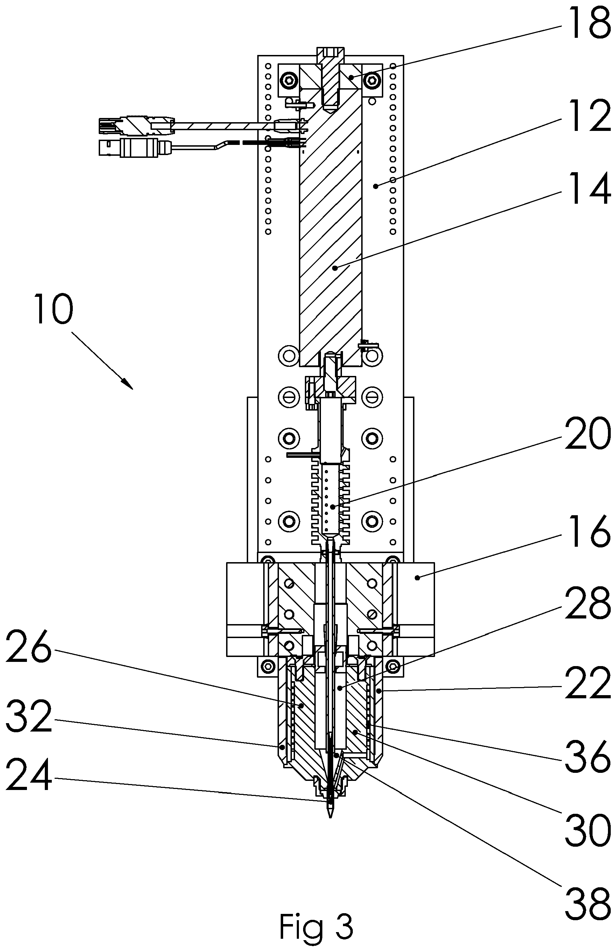

- Fig.3: ist ein vertikaler Längsschnitt durch die Anordnung aus Figur 1.

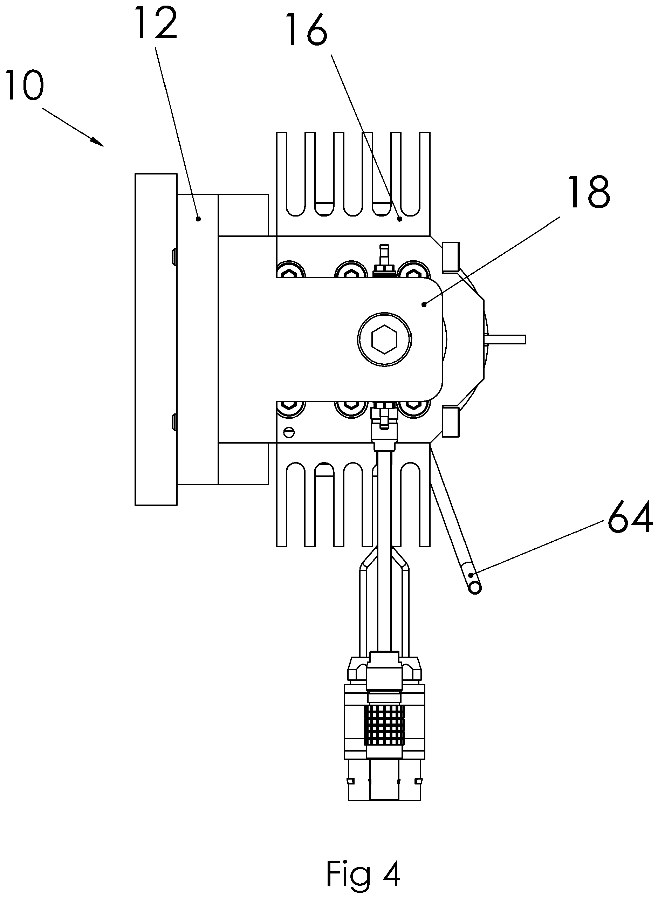

- Fig.4: ist eine Draufsicht auf die Anordnung aus Figur 1.

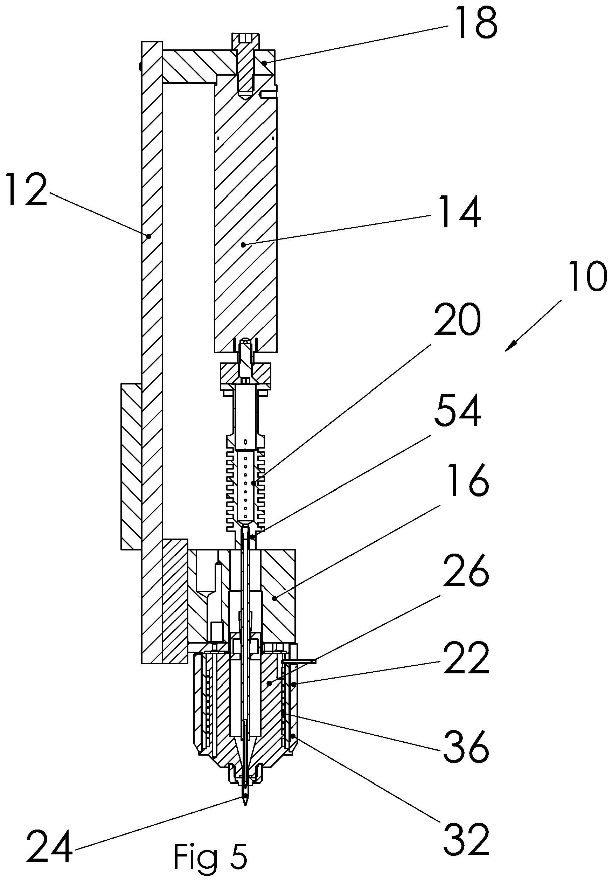

- Fig.5: ist ein vertikaler Längsschnitt durch die Anordnung aus Figur 1 entlang einer gegenüber Figur 3 um 90° gedrehten Schnittebene.
- Fig.6: ist ein Detail aus Figur 3.
- Fig.7: ist eine schematische Schnittdarstellung zur Illustration der Funktionsweise des Nachfüllprozesses von Lötkügelchen.
- Fig.8: ist eine angeschnittene, perspektivische Darstellung des Edelstahlzylinders für die Anordnung aus Figur 1.

### Beschreibung des Ausführungsbeispiels

Die Figuren zeigen eine allgemein mit 10 bezeichnete automatische Lötanordnung. Mit einer solchen Lötanordnung können Kontakte auf einem Wafer automatisch verlötet werden. Hierzu wird entweder der Wafer unter die Anordnung bewegt oder die Lötanordnung ist ähnlich wie ein Scanner oberhalb des Wafers beweglich angeordnet. Das Aufbringen der Lötmasse auf den Zielflächen erfolgt im kontinuierlichen Betrieb und kann Geschwindigkeiten im Bereich oberhalb 1000 Punkte/Sekunde erreichen.

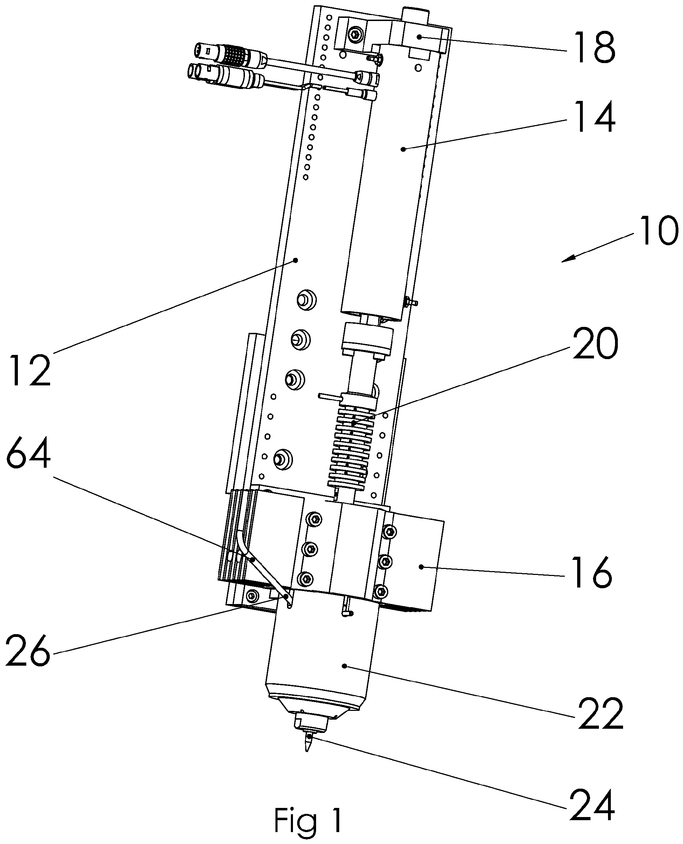

Die Lötanordnung 10 umfasst einen mit 12 bezeichneten, plattenförmigen Halter. An dem Halter 12 ist im oberen Bereich ein nachstehend detailliert beschriebener Piezoaktor 14 mit einer Halterplatte 18 befestigt. Im unteren Bereich ist ein unterer Kühlkörper 16 mit Kühlrippen an dem Halter 12 befestigt. Ein oberer Kühlkörper 20 ist im Bereich zwischen Piezoaktor 14 und unterem Kühlkörper 16 vorgesehen. Der untere Kühlkörper 16 kühlt einen Düsenkopf, der in Figur 1 mit 22 bezeichnet ist. Am unteren Ende des Düsenkopfs 22 ist eine vorspringende Düse 24 angeordnet. Verschiedene Zylinderkopfschrauben, die in der Darstellung als solche gut zu erkennen sind, dienen zur Fixierung der Komponenten an dem Halter.

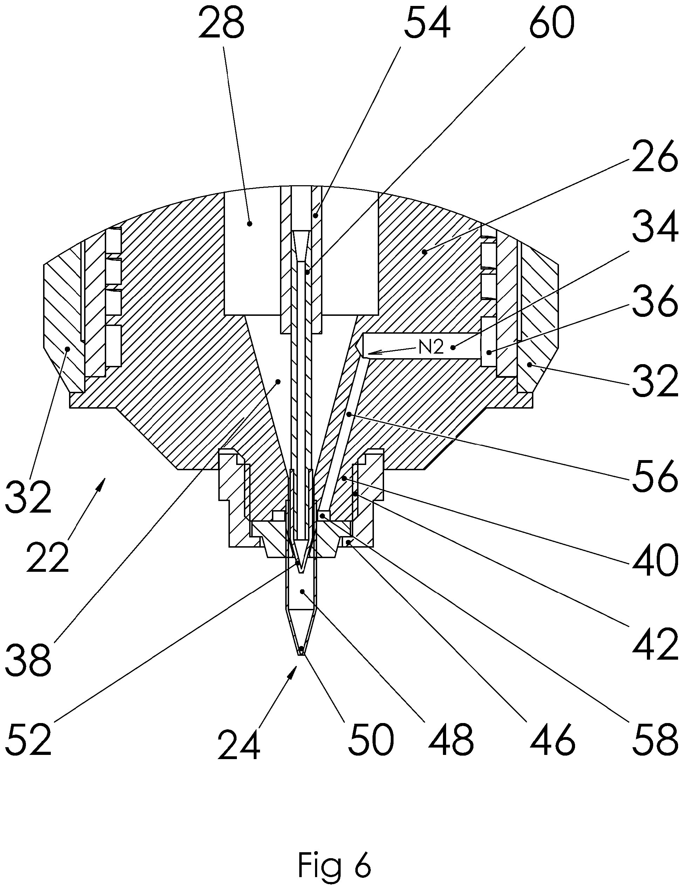

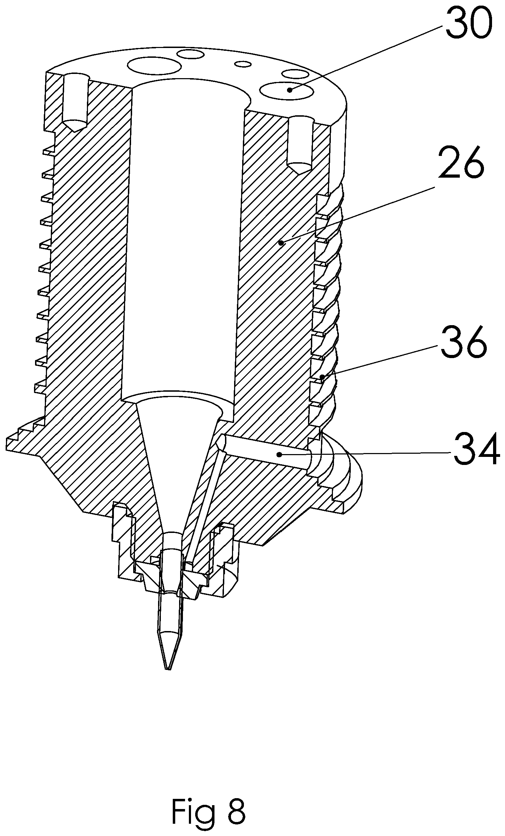

Der Düsenkopf 22 besteht im Wesentlichen aus einem massiven Edelstahlzylinder 26. Der Edelstahlzylinder 26 weist eine koaxiale Mittenbohrung 28 auf. Der Edelstahlzylinder ist in Figur 8 noch einmal gesondert dargestellt. Die Mittenbohrung bildet ein Flüssigkeitsreservoir. Um die Mittenbohrung 28 herum sind kranzförmig vier weitere Bohrungen 30 vorgesehen. In diesen Bohrungen 30 sind Heizelemente angeordnet, welche den Düsenkopf 22 beispielsweise auf 500°C bis 600°C beheizen. Der Edelstahlzylinder 26 sitzt in einem rohrförmigen Ring 32 und ist gegen diesen abgedichtet. Auf der Außenseite des Edelstahlzylinders 26 ist eine spiralförmige Nut 36 eingefräst. Das obere Ende der Nut 36 ist mit einer Stickstoffversorgung verbunden. Das untere Ende der Nut 36 mündet in einer radialen Bohrung 34, die in Figur 6 gut zu erkennen ist. Wenn der Ring 32 auf den Edelstahlzylinder 26 aufgesteckt ist, bildet die Nut einen umlaufenden Kühlkanal, durch den kühlender Stickstoff bis in die Bohrung 34 geleitet wird. Auf diese Weise hat die Außenseite des Düsenkopfes 22 eine gut handhabbare, niedrige Temperatur. Der in dem Kanal aufgeheizte Stickstoff wird aus der Bohrung in Richtung einer frei nach unten vorspringenden Düse 24 geleitet und sorgt dort für zusätzliche Heizung.

Die Mittenbohrung 28 ist am unteren Ende 38 konisch verjüngt. Am unteren Ende des Edelstahlzylinders ist ein Gewindezapfen 40 mit einem Außengewinde 42 angeformt (Fig.6). Darunter ist ein einstellbares Kopfteil 44 angeordnet. Das Kopfteil 44 wird mit einer auf den Gewindezapfen 40 aufgeschraubten Mutter 46 in seiner Lage gehalten. Das Kopfteil 44 weist eine Mittenbohrung auf, die sich nach unten konisch verjüngt. In dieser Mittenbohrung sitzt ein die Düse 24 bildendes Düsenteil 48 mit einer nach unten ausgerichteten Öffnung 50. Typischerweise hat die Düsenöffnung Abmessungen von einigen 10 Mikrometer bis einige 100 Mikrometer. Das Düsenteil 48 sitzt fest in dem Kopfteil 44 und erstreckt sich mit einem rohrförmigen oberen Bereich bis zum konisch zulaufenden Bereich 38 der Mittenbohrung 28. Dies ist in Figur 6 gut zu erkennen.

In dem Düsenteil 48 ist ein am unteren Ende konisch nach unten zulaufender Stößel 52 lose eingeführt. Zwischen der Innenwandung des Düsenteils 48 und dem Stößel 52 ist ein schmaler, ebenfalls konisch zulaufender Ringraum gebildet. Der Stößel 52 ist innen hohl. In den Stößel 52 ist am oberen Ende eine Kapillare eingeschraubt, die sich durch die gesamte Mittenbohrung, d.h. durch das gesamte Flüssigkeitsreservoir hindurch erstreckt. Im vorliegenden Ausführungsbeispiel ist die Kapillare 60 aus Wolframcarbid gefertigt. Es kann aber auch eine Kapillare aus Edelstahl verwendet werden. Das obere Ende der Kapillare 60 ist mit dem Piezoaktor 14 verbunden. Auf diese Weise kann der Stößel 52 mit ausgewählter Frequenz, z.B. 200 bis 1500 Hz auf- und abbewegt werden. Dabei wird die Kapillare 60 im oberen Bereich innerhalb der Mittenbohrung 28 in einer Führung 54 geführt. Die im Bereich des Flüssigkeitsreservoirs hohen Temperaturen ausgesetzte Kapillare 60 ist im oberen Übergangsbereich zum Piezoaktor 14 mit der ringförmigen Kühlung 20 gekühlt.

Der Gewindezapfen 40, die Mutter 46, das Kopfteil 44 und die Düse 48 ragen frei nach unten über den Edelstahlzylinder hinaus. Die Bohrung 34 mündet in einem schräg nach unten verlaufenden Kanal 56, der in einem Ringraum 58 im Bereich zwischen Gewindezapfen und Kopfteil 44 endet. Heißer Stickstoff, der die Wärme außen vom Edelstahlzylinder aufnimmt, heizt nun den vorspringenden Bereich und sorgt dafür dass die Temperatur an der Spitze sehr hoch ist, höher als im Düsenkopf.

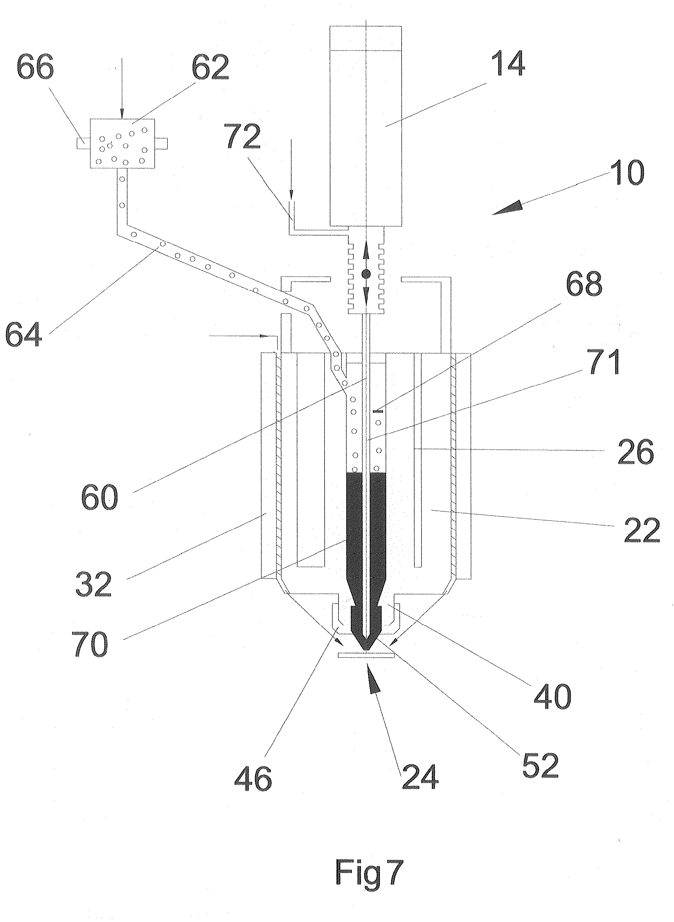

Figur 7 ist eine vereinfachte Darstellung der Anordnung 10 in der erkennbar ist, wie die Lötmasse aufgebracht wird. Ein außerhalb der Anordnung 10 vorgesehenes Reservoir 62 wird mit Kügelchen aus fester Lötmasse befüllt. Die Kügelchen werden über eine Zuleitung 64 in die Anordnung 10 gefördert. Die Zuleitung 64 ist derart dimensioniert, dass die Kügelchen sich ohne weitere Maßnahmen festsetzen würden. Daher ist ein Ultraschall-Rüttler 66 vorgesehen. Der Rüttler 66 bewegt das Reservoir 62 mit hoher Frequenz hin und her. Dabei werden die Kügelchen in Bewegung versetzt und gelangen nach unten in die Anordnung 10.

Das untere Ende der Zuleitung 64 mündet in der Mittenbohrung 28 des beheizten Edelstahlzylinders 26. Die Mittenbohrung 28 bildet ein Flüssigkeitsreservoir. Die Lotmasse, die hier in Form von Kügelchen zugeführt wird, schmilzt und steht als Flüssigkeit in dem Flüssigkeitsreservoir 28 zur weiteren Verwendung zur Verfügung. Es versteht sich, dass die Lotmasse auch in anderer Form, beispielsweise als Draht eingeführt werden kann.

Im oberen Bereich der Mittenbohrung 28 ist ein Füllstandssensor 68 vorgesehen. Mit dem Füllstandssensor 68 wird erfasst, ob ausreichend Lötmasse in dem Flüssigkeitsreservoir vorhanden ist. Solange der Füllstandssensor 68 nicht erreicht wird, wird der Rüttler 66 betrieben und weitere Lötmasse nachgefüllt. Wenn der Füllstandssensor 68 erreicht wird, wird der Rüttler 66 für eine ausgewählte Betriebsdauer abgeschaltet.

Die flüssige Lötmasse ist in Figur 7 mit 70 bezeichnet. Man erkennt, dass diese sich bis unten in die Düse 24 erstreckt. Die Viskosität ist bei der ausgewählten Temperatur immer noch so hoch, dass die Masse nicht aus der Öffnung des Düsenteils 48 austritt. Mit dem Piezoaktor 14 wird der Stößel 52 in vertikaler Richtung auf- und abbewegt. Die unterste Spitze des Stößels 52 bewegt sich dabei im konischen Bereich des Düsenteils 48. Die in dem Ringraum zwischen Innenwandung des Düsenteils 48 und Stößel 52 befindliche Lötmasse wird bei der Abwärtsbewegung durch die Düsenöffnung 50 gezwungen und nach außen abgegeben. Dabei wirkt die Lötmasse gleichzeitig als Schmiermittel zwischen den Wandungen. Die abgegebene Masse, kann durch Einstellung der Frequenz der Stößelbewegung am Piezoaktor 14 und die Amplitude der Bewegung eingestellt werden. Es ist aber auch möglich die abgegebene Masse durch Einstellung der Heiztemperatur im Edelstahlzylinder 26 einzustellen. Eine höhere Temperatur führt zu einer niedrigeren Viskosität und somit zu einer größeren abgegebenen Masse und umgekehrt.

Der Stößel 52 und die Kapillare 60 sind hohl. Ein Laserstrahl 71 wird durch den Stößel 52 und die Kapillare 60 bis zur Düse 24 geleitet. Mit dem Laserstrahl 71, beispielsweise aus einem Diodenlaser, wird die austretende Lötmasse beispielsweise auf 300°C bis 900°C geheizt, so dass diese erst nach Beendigung des Auftragsvorgangs abkühlen und aushärten kann. Zusätzlich wird Stickstoffgas aus einem Stickstoffreservoir über eine Zuleitung 72 in die Kapillare 60 und den Stößel 52 geleitet. Dadurch werden eine unerwünschte Oxidierung und kalte Lötstellen vermieden. Stickstoff wird auch in den Hohlraum oberhalb der Flüssigkeit geleitet und steht dort unter einem erhöhten Druck. Dadurch wird sichergestellt, dass immer die gleiche Menge an Lötmasse in dem Ringraum innerhalb des Düsenteils 48 vorhanden ist. Über den Druck in dem Hohlraum kann die ausgetragene Lötmasse ebenfalls beeinflusst werden. Ein hoher Druck führt zu einer größeren Menge.

Der optische Weg des Laserstrahls 71 wird mittels eines Strahlteilers ferner genutzt um zurückstrahlende Infrarotstrahlung zu detektieren. Aus den Signalen kann die Temperatur der aufgebrachten Lötmasse ermittelt werden.

Die beschriebene Anordnung eignet sich insbesondere für Verfahren wie Wafer-Bumpen, Substrat-Bumpen, Verlöten in verschiedenen Dimensionen und Feinpitch-Wafer-Bumpen. Die Anzahl der erzeugten Lötpunkte kann mit der Anordnung von derzeit ca. 5-10 Punkte/Sekunde auf mehr als 1000 Punkte / s. erhöht werden. Auch die Reproduzierbarkeit verbessert sich mit der beschriebenen Anordnung wesentlich.

Die vorstehend beschriebene Anordnung wurde detailliert beschrieben. Es versteht sich aber, dass dies nicht limitierend für den Schutzumfang des Patents sein soll, der ausschließlich durch die Patentansprüche bestimmt wird. Viele Alternativen und gleichwirkende Mittel sind dem Fachmann geläufig, die eingesetzt werden können, ohne vom Erfindungsgedanken abzuweichen. Insbesondere können vereinzelt die geometrische Anordnung, Materialien, Abmessungen und Mengen variieren ohne vom Erfindungsgedanken abzuweichen.

## Patentansprüche

1. Anordnung (10) zum reproduzierbaren Aufbringen kleiner Flüssigkeitsmengen auf eine Zielfläche enthaltend
(a) ein Flüssigkeitsreservoir (28, 38) mit einer oberhalb der Zielfläche positionierbaren Öffnung (50),
(b) einen in Öffnungsrichtung beweglich angeordneten Stößel (52, 60), und
(c) einen Antrieb (14) zur Bewegung des Stößels, wobei
(d) die Öffnung (50) in einer vorspringenden, sich verjüngenden Spitze oder Düse gebildet ist, und
(e) der Stößel (52, 60) sich durch die gesamte in dem Flüssigkeitsreservoir (28, 38) befindliche Flüssigkeit (70) hindurch bis in die Spitze oder Düse (48) erstreckt, so dass bei einer Stößelbewegung in Öffnungsrichtung Teile der Flüssigkeit im Öffnungsbereich vom Stößel durch die Öffnung nach außen bewegt werden, **dadurch gekennzeichnet, dass**
(f) ein Laser vorgesehen ist, dessen Strahlung (71) auf den Öffnungsbereich gerichtet ist; und
(g) der Stößel (52, 60) hohl ist und die Laserstrahlung (71) durch den Stößel in den Öffnungsbereich geleitet wird.

2. Anordnung nach Anspruch 1, **dadurch gekennzeichnet, dass**
(a) die Flüssigkeit von Lötmasse oder einer anderen Masse gebildet ist, die bei Raumtemperatur fest ist, und
(b) das Flüssigkeitsreservoir (28, 38) auf eine Temperatur oberhalb des Schmelzpunktes der Masse beheizbar ist.

3. Anordnung nach einem der vorgehenden Ansprüche, **dadurch gekennzeichnet, dass** eine Gasquelle vorgesehen ist, deren Gas in den Öffnungsbereich leitbar ist.

4. Anordnung nach Anspruch 3, **dadurch gekennzeichnet, dass** das Gas Stickstoff oder ein anderes inertes Gas oder Gasgemisch ist.

5. Anordnung nach Anspruch 3 oder 4, **dadurch gekennzeichnet, dass** das Gas beheizt ist.

6. Anordnung nach Anspruch 5, **dadurch gekennzeichnet, dass** das Gas durch einen außen liegenden Kanal (36) von der Gasquelle zum Öffnungsbereich geleitet wird, so dass Wärme aus dem Flüssigkeitsreservoir aufnehmbar ist.

7. Anordnung nach einem der vorgehenden Ansprüche, **dadurch gekennzeichnet, dass** das Flüssigkeitsreservoir aus einem weiteren Reservoir (62) aufgefüllt wird, das über einen Kanal (64) mit dem Flüssigkeitsreservoir (28, 38) verbunden ist.

8. Anordnung nach Anspruch 2 und 7, **dadurch gekennzeichnet, dass** die Masse in Form von Kügelchen oder anderem Schüttgut vorliegt und ein Rüttler (66) vorgesehen ist, bei dessen Aktivierung die Kügelchen oder das Schüttgut durch den Kanal (64) in das Flüssigkeitsreservoir (28, 38) geleitet werden.

## Claims

1. Assembly (10) for reproducibly applying of small amounts of liquid onto a target surface, comprising
(a) a liquid reservoir (28, 38) with an opening (50) positioned above the target surface,
(b) a plunger (52, 60) movable in an opening direction, and
(c) an actuator (14) for moving the plunger, wherein
(d) the opening (50) is formed by a projecting, conical tip or jet, and
(e) the plunger (52) is a plunger conically pointed in a downward direction through the entire liquid reservoir (28, 38) into the tip or jet (48) in such a way that portions of the liquid present in the opening range are moved outwards through the opening by the plunger upon movement of the plunger in an opening direction;
**characterized in that**
(f) a laser is provided emitting radiation (71) which is directed towards the opening range; and
(g) the plunger (52, 60) is hollow and the laser radiation (71) is guided through the plunger to the range of the opening.

2. Assembly according to claim 1, **characterized in that**
(a) the liquid is solder material or any other material which is solid at room temperature, and
(b) the liquid reservoir (28, 38) is heatable to a temperature above the melting point of the material.

3. Assembly according to any of the preceding claims, **characterized in that** a gas source is provided with gas adapted to be guided into the range of the opening.

4. Assembly according to claim 3, **characterized in that** the gas is nitrogen or another inert gas or gas mixture.

5. Assembly according to claim 3 or 4, **characterized in that** the gas is heated.

6. Assembly according to claim 5, **characterized in that** the gas is guided through an outer canal (36) from the gas source to the range of the opening, whereby heat can be absorbed from the liquid reservoir.

7. Assembly according to any of the preceding claims, **characterized in that** the liquid reservoir is filled from another reservoir (62) which is connected to the liquid reservoir (28, 38) by a canal (64).

8. Assembly according to claim 2 and 7, **characterized in that** the material is present in the form of balls or other loose material and a vibrator (66) is provided adapted to guide the balls or loose material through the canal (64) into the liquid reservoir (28, 38) upon activation.

## Revendications

1. Disposition (10) destinée à déposer de manière reproductible des petites quantités de fluide sur une surface cible, comprenant
(a) un réservoir de fluide (28, 38) muni d'un orifice (50) pouvant être positionné au-dessus de la surface cible,
(b) un poussoir (52, 60) disposé de manière à pouvoir se déplacer en direction de l'orifice, et
(c) un dispositif d'entraînement (14) destiné à déplacer le poussoir,
(d) l'orifice (50) étant formé dans une pointe ou buse saillante se rétrécissant, et
(e) le poussoir (52, 60) s'étirant à travers tout le fluide (70) se trouvant dans le réservoir de fluide (28, 38) jusqu'à la pointe ou buse (48) de sorte que, lors du déplacement du poussoir en direction de l'orifice, des parties de fluide sont déplacées par le poussoir vers l'extérieur dans la zone de l'orifice à travers l'orifice,
**caractérisée en ce que**
(f) il est prévu un laser dont le rayonnement (71) est dirigé sur la zone de l'orifice ; et
(g) le poussoir (52, 60) est creux et le rayonnement laser (71) est guidé à travers le poussoir dans la zone d'orifice.

2. Disposition selon la revendication 1, **caractérisée en ce que**
(a) le fluide est formé de pâte à braser ou de toute autre pâte qui se solidifie à température ambiante, et
(b) le réservoir de fluide (28, 38) peut être chauffé à une température supérieure au point de fusion de la pâte.

3. Disposition selon l'une quelconque des revendications précédentes, **caractérisée en ce qu'**il est prévu une source de gaz dont le gaz peut être amené à l'intérieur de la zone d'orifice.

4. Disposition selon la revendication 3, **caractérisée en ce que** le gaz est de l'azote ou tout autre gaz inerte ou tout autre mélange de gaz inertes.

5. Disposition selon la revendication 3 ou 4, **caractérisée en ce que** le gaz est chauffé.

6. Disposition selon la revendication 5, **caractérisée en ce que** le gaz est amené de la source de gaz vers la zone d'orifice par un canal (36) se trouvant à l'extérieur de sorte à pouvoir capter la chaleur émanant du réservoir de fluide.

7. Disposition selon l'une quelconque des revendications précédentes, **caractérisée en ce que** le réservoir de fluide est rempli par un réservoir supplémentaire (62) qui est relié au réservoir de fluide (28, 38) par l'intermédiaire d'un canal (64) .

8. Disposition selon les revendications 2 et 7, **caractérisée en ce que** la pâte se présente sous forme de perles ou tout autre produit en vrac et il est prévu un dispositif à secouer (66) dont l'activation permet d'amener les perles ou le produit en vrac dans le réservoir de fluide (28, 38) par le canal (64).
